# EUROPEAN PATENT APPLICATION

(11) **EP 1 245 197 A2**
(43) Date of publication of application: **02.10.2002**
(21) Application number: 00983487.0
(22) Date of filing: 19.12.2000
(51) Int. Cl.: A61C 13/097

(54) **ARTIFICIAL TOOTH AND CONTROLLER**

(30) Priority: 27.12.1999 JP 37703499; 23.05.2000 JP 2000190263; 07.07.2000 JP 2000243408; 16.08.2000 JP 2000284339; 08.12.2000 JP 2000403948; 19.12.2000 JP 2000404313
(71) Applicant: Uji, Hideyo, Tokyo 104-0061 (JP)
(72) Inventor: Uji, Hideyo, Tokyo 104-0061 (JP)
(74) Representative: Hengelhaupt, Jürgen, Dipl.-Ing.
(86) International application number: JP0008968
(87) International publication number: WO01024722

(57) **Abstract**

An artificial tooth comprises a relieving material (10), an adjustment mechanism (3), an occlusal stress sensor (4), and a crown connector (6). An artificial tooth adjuster for adjusting the occlusal surface of an artificial tooth by a method in which information about an occlusal stress sensing film (150) is inputted into a computer (151), and a drive motor (152) is controlled until the occlusion becomes safe. As a result the occlusion adjustment is quickly made, the whole oral cavity is correctly grasped, and an ideal occlusion is realized.

## Description

### Field of the invention

This invention relates to occlusion adjustment of an artificial tooth or teeth.

### Description of related art

So far, it is understood that a patent application, PCT/JP98/03021 (06, 07, 1998), filed by Uji Hideyo, is a known art in this field.

The prior art, however, gives rise to the following problems:
1. It takes rather a long time to adjust occlusion to a patient's satisfaction, because said adjustment should be operated by driving a screw or screws incorporated in said artificial tooth or teeth.
2. It needs repeatedly a few to several times of marking with biting papers.
3. The more the number of artificial teeth are to be planted, the longer working time is needed for the operator to do aaid adjustment.
4. It is difficult to make a comfortable occlusion completely throughout the mouth of a given patient.
5. A comfortable occlusion to meet the requirements based upon different occlusion principles cannot be obtained instantly.
6. Said manual-driven screw or screws on the surface of an artificial tooth tend to be unhygienic area.
7. There will be still room for improvement that more comfortable occlusion can be made by natural adjustment by means of a patient's own occlusion-adjusting ability.
8. There will be room for improvement that said artificial tooth or teeth may have all the functions capable of automatic occlusion adjustment.
9. There will be room for improvement that a patient himself or herself can sense and select the best occlusion
10. There will be room for improvement that an electric power source can be provided in a patient's mouth without using any type of chemical battery.
11. An elevating device or devices are apt to be deformed and/or damaged.
12. Practical use of varieties of colors and physical forms of said artificial tooth or teeth is limited to in a narrow range for said prior art.

### Objects of the present Invention

The present invention offers an ideal occlusion of artificial tooth or teeth as grasping correctly all of information about situations of a patient's mouth, thus providing speedy and satisfactory adjustment of occlusion for said patient.

### Disclosure of the Present Invention

For the purpose of solving said first problem, a dental-corona connector is provided, said dental-corona connector is capable of being controlled with a driving motor so as to adjust movements and/or pressure-buffering of the occlusal-surface, and a connector meeting the standard requirements of said dental-corona connector is provided to said driving-motor, thus said two connectors are ready to be coupled and decoupled. In addition to it, when necessary, the pressure-buffering material or materials of said pressure-buffering part are able to be hardened during mastication so as to be sufficiently durable even under an excessive masticating force.

For the purpose of solving said second problem, an occlusion-pressure sensor or sensors are provided in an artificial tooth or teeth, said occlusion-pressure sensor or sensors can sense information about the occlusion when the occlusal-surface reaches a stable occlusion-state with the counterpart tooth or teeth as a result of adjustment of occlusion and necessary movements for adjustment

For the purpose of solving said third problem, information sent from said occlusion-pressure sensors of a few or several artificial teeth is in turn sent to a computer through said dental-corona connectors, and then said computer gives appropriately said information about said occlusion and feeling of contact between said teeth to a driving-motor, making said driving-motor drive appropriately, thus resulting in an effective adjustment of a number of artificial teeth at once For the purpose of solving said fourth problem, information about occlusion-pressure sensing paper bitten by upper and lower natural teeth and/or artificial tooth or teeth is put into said computer, and said computer dictates controlling instructions to do adjustment, thus making it possible to move and adjust said occlusal-surface to get stable occlusion.

For the purpose of solving said fifth problem, information about individual patient's position of occlusion center, central position, sliding movements towards the sides and sliding movements forwards, interference due to the operation side and the non-operation side, being sent from said occlusion-pressure sensing film or films and occlusion-pressure sensor or sensors in said artificial tooth or teeth, is put into said computer, said computer dictates controlling instructions to drive, thus making it possible to recover stable occlusion based upon the plural occlusion principles. At the same time, the system of the present invention is able to select instantly the best occlusion state out of a variety of said recovered occlusion-states, thus making it possible to provide said selected best occlusion-state in the given mouth within a moment.

For the purpose of solving said sixth problem, a knob on the surface of said dental-corona extended from the inside of said artificial tooth is formed with film which is made of material capable of elongating and shrinking freely, thus enabling the link between the outside and the inside of said dental-corona to work at through said film.

For the purpose of solving said seventh problem, said artificial tooth or teeth having an elastic pressure-buffering material or materials are capable of elastic-deforming to establish a desirable occlusion so that said elastic material or materials get a stable occlusion-state, and then said elastic material or materials harden, having absorbed strains resulted from said deformation, which enables said artificial tooth or teeth to become hardened en bloc.

In addition to it, said pressure-buffering material or materials are capable of hardening at body temperature in patient's mouth, but softening at different temperatures outside the mouth by using different characteristic material or materials, for example, that capable of hardening and/or softening at the operator's will by irradiation of different kinds of light.

For the purpose of solving said eighth problem, invented is an artificial tooth system having a stand-alone adjustment device comprising an occlusal-preseure sensor or sensors capable of communicating with a microcomputer which is capable of controlling a driving-motor or motors that enable said adjusting mechanism to work properly, thus said system having all necessary functions to adjust occlusion appropriately.

For the purpose of solving said ninth problem, invented is an artificial tooth system by which a patient is able to sense by himself or herself the occlusion state of said artificial tooth or teeth in his or her mouth, and to adjust said occlusion state at will by means of a controlling transmitter which makes the occlusal-surface move to the best state, thus making it possible to adjust said occlusion state easily and properly.

For the purpose of solving said tenth problem, invented is an artificial tooth system having a driving-motor or motors, whose electric power source or sources, likely having relatively-short-service-time, are wirelessly charged by high-frequency energy and/or electro-magnetic radiation energy.

For the purpose of solving said eleventh problem, invented is a durable artificial tooth system having a wedge-like elevating block or blocks so that said adjustable elevating block or blocks have sufficient strength to be durable against breakdowns or damage

For the purpose of solving said twelfth problem, invented is an artificial tooth system being made of porcelain and/or hard-resins and/or metals and/or alloys, thus said material or materials being able to provide colors and/or physical conformations to meet any patient's demand, and after that said occlusion-adjusting mechanic system is incorporated into said customized artificial tooth system providing patient's favorite features.

### Brief Description of the Drawings

Figure 1 shows a vertical sectional view of an artificial anterior tooth.
Figure 2 shows a vertical sectional view of an artificial molar or premolar tooth.
Figure 3 shows a wiring diagram of an artificial tooth together with a driving-motor and accessories..
Figure 4 shows a schematic diagram on a controller system over an artificial tooth.
Figure 5 shows a vertical sectional view of a dental-corona connector.
Figure 6 shows a vertical sectional view of an artificial molar or premolar tooth.
Figure 7 shows a vertical sectional view of an artificial anterior tooth.
Figure 8 shows a vertical sectional view of an artificial molar or premolar tooth.
Figure 9 shows a vertical sectional view of an artificial anterior tooth.
Figure 10 shows a vertical sectional view of an artificial molar or premolar tooth.
Figure 11 shove a vertical sectional view of an artificial molar or premolar tooth.
Figure 12 shows a vertical sectional view of an artificial anterior tooth.
Figure 13 shows a vertical sectional view of an artificial molar or premolar tooth.
Figure 14 shows a vertical sectional view of an artificial anterior tooth.
Figure 15 shows a vertical sectional view of an artificial molar or premolar tooth.
Figure 16 shows a vertical sectional view of an artificial anterior tooth.
Figure 17 shows a vertical sectional view of an artificial anterior tooth.
Figure 18 shows a vertical sectional view of an artificial molar or premolar tooth.

### Best Modes of Embodiments of this Invention

Referring now to figures, the preferred embodiments of this invention are exemplified as follows:

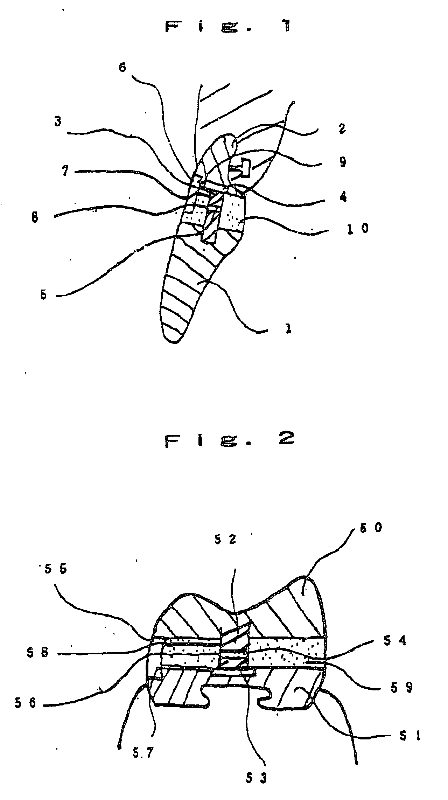

Figure 1 shows a sectional view of an artificial anterior tooth by which the most basic concept of this invention regarding the artificial anterior teeth will be embodied. Said anterior tooth, having an open port (a dental-corona port) at its dental-corona connector (6), comprises an adjusting mechanism (3) and a connecting rod (7) with which said adjusting mechanism (3) is operated, and both of said adjusting mechanism (3) and said connecting rod (7) are set up between a connecting portion (2) and a dental-corona (1). At least one or more of occlusal-pressure sensing elements (4) are provided, and at least one or more of information-communicating lines (9) connected with said occlusal-pressure sensing element (4) or elements are provided at the open-port at said dental-corona connector (7). A pressure-buffering mechanism (5) is provided, when necessary, and a connecting rod (8) is provided at said open port at said dental-corona connector. Said dental-corona (1), adjusting mechanism, (3) and connecting portion (2) are decomposable. Said dental-corona (1) can be made of porcelain and/or hard resins having as good color and physical conformation as a patient thinks becoming his or her favorite one. Said adjusting mechanism (3) can be replaced with a good one when it is broken-down or damaged.

Said adjusting mechanism (3) enables said dental-corona (1) to move freely, in the manner such as vertically, horizontally, obliquely, moving-at-an-angle, and/or rotating around an axis.

Said occlusal-pressure sensing element (4) or elements are so made that they can sense when tooth or teeth make occlusion with a counterpart tooth or teeth.

Buffering materials (10) and (59) are able; (a), to deform elastically under any circumstances, (b), to deform elastically as absorbing any strains because they are capable of softening themselves during adjustment of occlusion, thus having elastic characteristics as a mass element, and to harden wholly as any resulted strains being absorbed by said materials after a good occlusion has been completed, (c), to harden in a range of temperature that is not as high as for membranes in one's mouth to burn, or not as low as for membranes in one's mouth to frozen, however, to soften outside said hardening range of temperature, thus resulting in easy operation of occlusion adjustment, (d), to harden or soften at a concerned person's disposal by means of irradiation of two kinds, having different frequencies, of light. In this context, any combinations of two different physical states, as having elastic characteristics during occlusion adjustment and hardening wholly after that, thus resulting in hardened artificial tooth or teeth capable of masticating well, are able to meet such occlusion adjustment, as long as they are capable of softening and keeping elastic characteristics as a mass element during occlusion adjustment, and they are capable of hardening wholly, and having absorbed any strains resulted from said adjustment after a good occlusion has been completed.

Figure 2 shows a sectional view of a basic formation of artificial molar or premolar tooth of this invention. A connecting rod (58) linking to an adjusting mechanism (52), set up between the connecting portion (51) of said artificial tooth and the occlusal-surface (50) thereof and capable of adjusting the occlusal-surface by giving proper movements to said occlusal-surface, is exposed at the open port of a dental-corona (55). Said oclusal-surface and said adjusting mechanism are decomposable Said occlusal-surtace (50) can be made of porcelain and/or hard resins having as good color and physical conformation as a patient thinks becoming his or her favorite one. Said adjusting mechanism (52) can be replaced with a good one when it is broken down or damaged.

Said adjusting mechanism (52) enables said occlusal surface (50) to move freely, in the manner such as vertically, horizontally, obliquely, moving-at-an-angle, and/or rotating around an axis. With regard to said occlusal-pressure sensing element, at least one or more of said occlusal-pressure sensing elements (53) should be fabricated. In one case, one of said occlusal-pressure sensing element (53) is incorporated into right under the functional cusp. In the other case in addition to it, another occlusal-preesure sensing element is incorporated into under the non-functional cusp.

Said occlusal-pressure sensing element is capable of sensing occlusion-pressure against a counterpart tooth or teeth when said occlusion takes place.

Figure 3 shows a driving-motor system for occlusion-adjustment, wherein a connector (101) of a driving-motor (102) is compatible to a dental-corona connector (100) of an artificial tooth, and easily attached to and detached from just opposite face of a dental-corona connector (100). Said driving-motor (102) is capable of adjusting said artificial tooth in the manner that a control-switch (104) is operated, and in turn it lets a controller (105) control said driving-motor. At least one or more of said occlusal-pressure sensing elements incorporated into said artificial tooth or teeth sense the given occlusal-pressure, and said controller (105) makes said driving-motor (102) drive so as to adjust appropriately the occlusion of said artificial tooth or teeth.

Upon plugging said connector (101) of said driving-motor in said dental-corona connector (100), the current height of dental-corona can be displayed. Speed of said driving-motor, the moving range to obtain appropriate occlusion, and intensity of the torque are controllable. It is possible to adjust the occlusion by a continuous movement and/or employing a stepping-motor making bit-by-bit adjustment, which can be a very small displacement in scale of only microns,

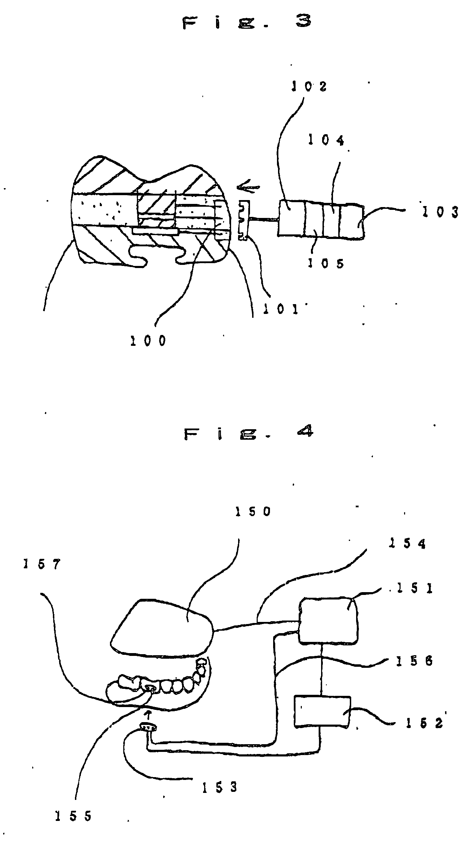

As sown in Figure 4, an occlusal-pressure sensing film (150), linking to a computer (151) by means of a cable (154) or wireless communication, is capable of sensing any given occlusion pressure, and making control over said occlusion by means of sending its information to said computer (151), and said connector (153) extending from said driving-motor (152), but being attachable to and detachable from a dental-corona connector (157), is capable of instructing work of occlusion adjustment. In said artificial tooth or teeth, at least one or more of occlusal-pressure sensing elements (155) are incorporated, which are capable of sending current information to said computer (151) through said dental-corona connector (157), said connector of the driving-motor, and a feed-back line (156), thus controlling a delicate movement of said driving-motor to obtain a desirable occlusion state.

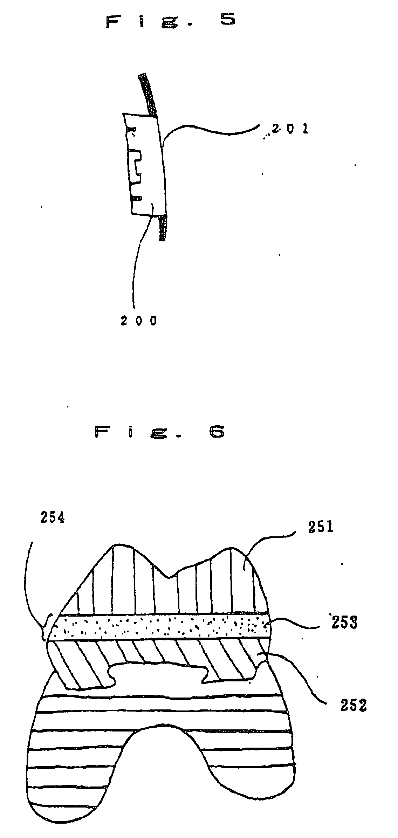

Figure 5 shows a flexible film (200) covering said dental-corona connector (201) so as not to give rise to any unhygienic area that may he possibly produced.

As shown in Figure 6, an adjuating layer (254), made of plastic-buffering material (253), is incorporated into between said occlusal-surface (251) and said connecting portion (252).

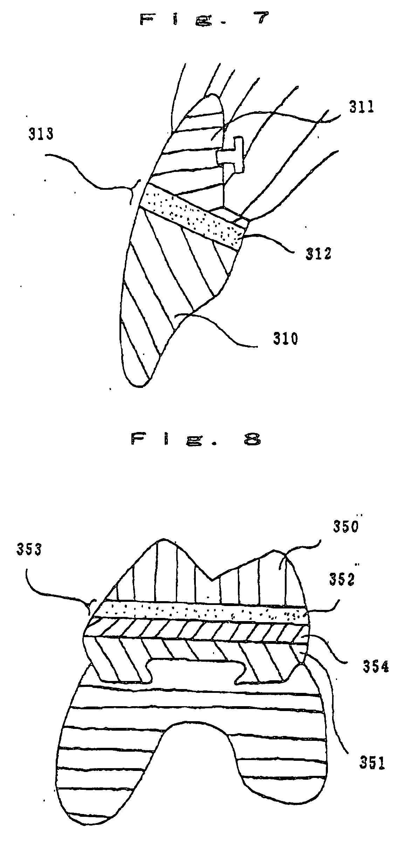

In Figure 7, an adjusting layer (313), made of plastic-buffering material (312), is incorporated into between said dental-corona (310) and said connecting portion (311).

In Figure 8, an adjusting layer (353) made of plastic-buffering material (352) and a pressure-buffering layer (354) are incorporated into between said occlusal-surface (350) and said connecting portion (351).

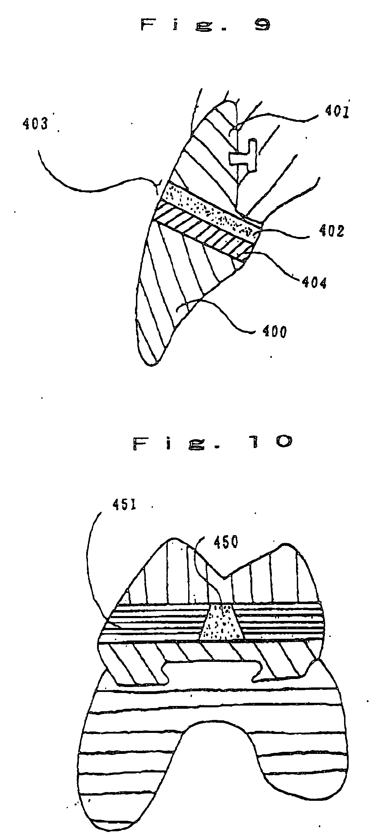

In Figure 9, an adjusting layer (403), made of plastic-buffering material (402), and a pressure-buffering layer (404) are incorporated into between said occlusal-surface (400) and said connecting portion.

In Figure 10, a secondary-hardening plastic material or materials are capable of being hardened, thus solidifying said whole artificial tooth after a primarily-hardening plastic buffering material (450) has been hardened, and a stable occlusion state has been obtained by the movement in the lateral direction. Any combinations of two different characteristics of said primarily-hardening plastic material (450) and said secondary-hardening plastic material (451) are applicable for the purpose stated above, for example, (a), of different hardening periods of time, (b), of different hardening degrees in temperature, one of which is capable of being hardened in one's mouth, while the other can be softened at higher or lower temperature outside one's mouth, and (c), of two different hardening characteristics by light, one is capable of being hardened by irradiation of a certain wave-length light, while the other capable of being softened by a different wave-length light, and so on.

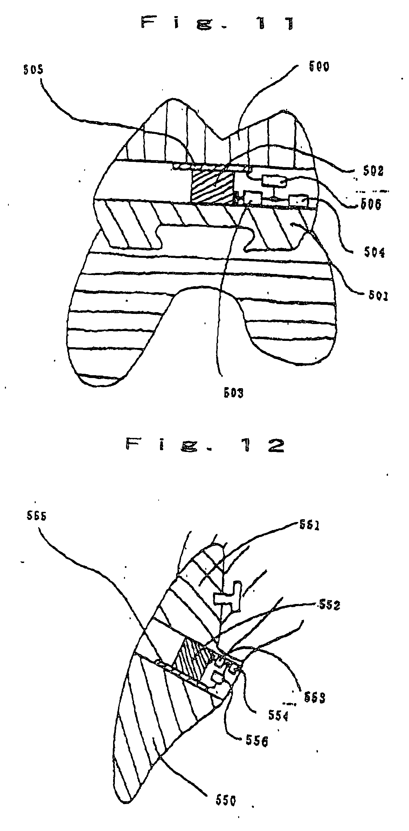

In figure 11, an occlusal-pressure sensing element (505), an adjusting mechanism (502), a driving-motor (503), a power source (504), and a microcomputer (506) are provided between said occlusal-surface (500) and said connecting portion (501).

In Figure 12, a microcomputer (556), a driving-motor (553), an adjusting mechanism (552), a power source (554), and an occlusal-pressure sensing element (555) are provided between said dental-corona (550) and said connecting portion (551).

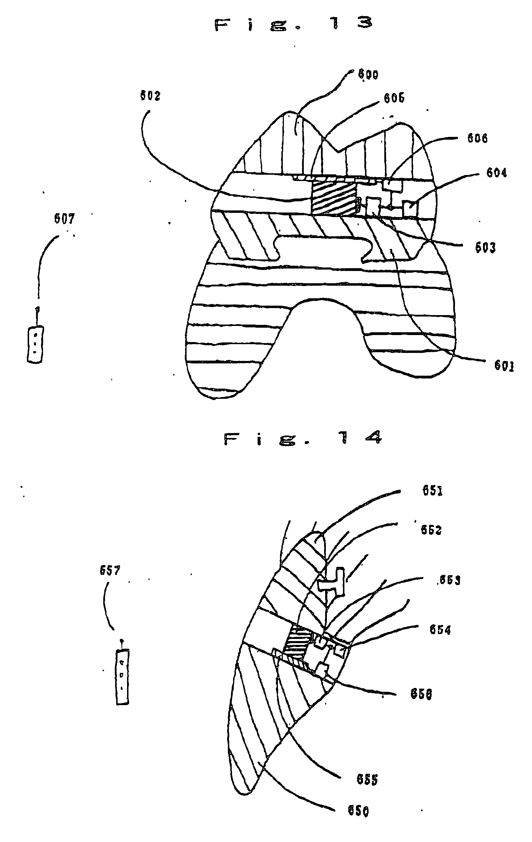

In Figure 13, a receiver (606), an occlusal-pressure sensing element (605), a power source (604), a driving-motor (603), and an adjusting mechanism (602) are provided between said occlusal surface (600) and said connecting portion (601). In addition, a controlling transmitter (607) is provided that is capable of controlling said artificial tooth or teeth from the outside of one's mouth.

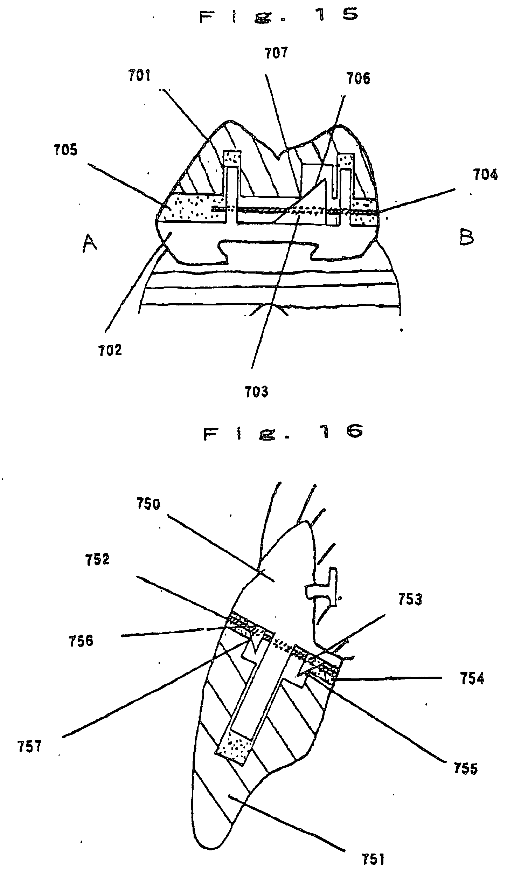

In Figure 14, a receiver (656), an occlusal-pressure sensing element (655), a power source (654), a driving-motor (653), and an adjusting mechanism (652) are provided between said dental-corona (650) and said connecting portion (651). In addition, a controlling transmitter (657) is provided that is capable of controlling said artificial tooth or teeth from the outside of one's month.

In Figure 15, a wedge-like block (703), capable of sliding up and down and being provided between said occlusal surface (701) and said connecting portion (702), links with a connecting rod (704), and the occlusal-surface (701) is displaced by forwards or backwards movement of said wedge-like block (703) by means of said connecting rod (704), as it is rotated in the right or left direction, thus providing an appropriate occlusion state.

In Figure 16, a wedge-like block (753), capable of sliding up and down and being provided between said occlusal surface (751) and said connecting portion (750), links with a connecting rod (752), and said wedge-like block (753), capable of enabling said dental-corona (751) to slide up or down, is moved forwards or backwards by means of said connecting rod (752), as it is rotated in the right or left direction, thus displacing properly said dental-corona (751), and providing an appropriate occlusion state.

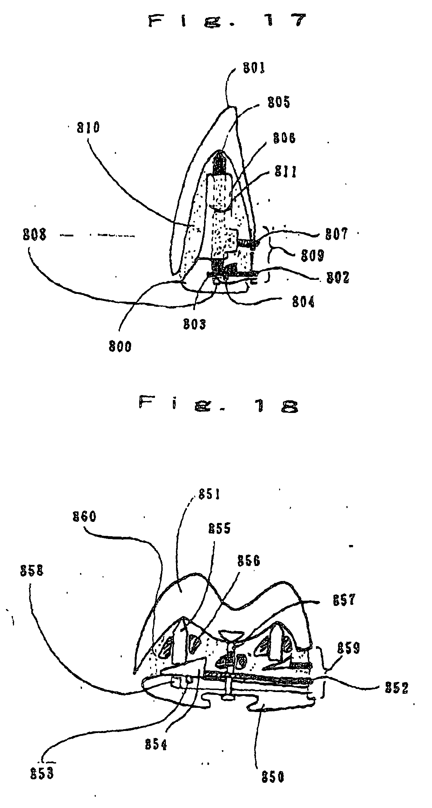

Figure 17 shows a sectional view of artificial anterior tooth of this invention, which illustrates however, a simplified basic composition of this invention for the convenience of understanding.

An elevating pillar guide (806) formed en bloc together with a connecting portion (800) enables an elevating pillar (805) to rise up or fall down vertically, A connecting rod (807), linking with an elevating pillar (805) and a dental-corona (801), and being exposed at an open-port of a dental-corona connector (809), enables said dental-corona (801) as a whole to move forwards or backwards, thus adjusting properly said occlusion state, as said connecting rod (807) is turned in the ordinary direction or in the reverse direction, thus making said dental-corona connector approach to or depart from aaid elevating pillar (805). The number of said elevating pillar (805) must be at least one or more per said artificial tooth.

The inner structure of the entire body of said dental-corona (801) is strongly enforced with said pressure-buttering material or materials composed of an elastic material or materials, and/or one or more springs that act as spring element, thus said dental-corona acts as one rigid body, although it comprises a few different components.

Said connecting rod (802) exposed at said open port of said dental-corona connector ( 809) enables said elevating pillar to rising up or falling down as said connecting rod turns in the ordinary direction or in the reverse direction.

An elevating pillar, facing a rotational disk (803) having a sloping surface, moves as said rotational disk (803) rotates, and varies its acting range against said elevating pillar, thus making occlusion come into the beat fitness, as shown in Figure 17. However, besides a disk type, any type of device body, as long as it has enough strength to serve for the purpose, can be applied to such the purpose.

Said occlusal-pressure sensing element or elements (808) are provided, when necessary, at such spot or spots where occlusal-pressure is sensible, and an information communication line is exposed at an open port of said dental-corona connector (809).

Figure 18 shows a sectional view of artificial molar or premolar tooth of this invention, which illustrates, however, a simplified basic composition of this invention for the convenience of understanding.

Elevating pillars (855) are provided at three points of sites, namely right under the buccal mesial cusp, right under the buccal distal cusp, and right under lingual cusp, because the buccal cusp acts as the functional cusp with regard to a mandibular molar tooth. The number of said elevating pillar (855) must be at least one or more pieces per one artificial tooth.

As shown in Figure 18, said rotational disk (854) having differentiated thickness is provided, and connected with said connecting rod (852), so that rotating said connecting rod (852) enables said rotational disk (844) to rotate, thus making said elevating pillar (855) rise up or fall down. However, it is not limited to use a rotational disk for the purpose of making said elevating pillar (855) rise up or fall down, but any devices can be applied for this purpose, as long as they can have such the capability. Said occlusal-surface (851) is appropriately adjusted by operating one-by-one orderly these three points, because said dental-corona is supported with said three supporting points,

A holding pillar, capable of adjusting appropriately said dental-corona (851) at a concerned person's disposal, is provided approximately at the center of said three supporting points so as to stabilize said occlusal-surface, as said occlusal-surface (851) is tough as pulling against each other, in spite of said elevating pillars (855) that move upwards or downwards for the purpose of said occlusion adjustment, because this invention provides elastic material or materials as mass element, and/or a spring or springs as spring element so that said dental-corona (851) and said connecting portion (850) can always be tough as being pulled against each other.

With regard to said occlusal-pressure sensing element (858), they can be set up whenever necessity arises, and wherever to sense directly imposing occlusa-pressure, and said information communicating line or lines are provided at an open port of said dental-corona connector (859).

This invention provides the following beneficial effects, as it comprises as stated beforehand.

In this invention, appropriate adjustment of occlusion is so rapidly obtained, any movements for occlusion adjustment can be driven by a driving-motor. And pressure-buffering material or materials are hardened responding to given controlling conditions, so that the set value of hardness does not vary by any masticating force, thus providing a reliable, stable artificial tooth or teeth.

Movements for appropriate adjustment can be easily and completely carried out until the occlusal-surtace can sense appropriate occlusal pressure and feel the soft touch without repeated-use of biting papers, because said occlusal-pressure sensing element or elements are provided in said artificial tooth or teeth of this invention,

A stable and reliable occlusion state can be obtained, as appropriate adjustment can be easily and completely carried out during the lateral movement of said occlusal-surface, because at least one or more of said occlusal-pressure sensing elements is provided that are capable of sensing the center of occlusal-surface, occlusal-pressure imposed upon said occlusal-surface in said lateral movement, and feeling of the touch, so that it makes possible to keep appropriate occlusion state based upon the center of said occlusion state.

In addition to it, said occlusal-pressure sensing film or films make it possible to grasp the whole occlusion state of not only said artificial tooth or teeth but also natural tooth or teeth, thus obtaining the stable, reliable occlusion state.

Said plastic buffering material or materials enable said artificial tooth or teeth to have stable, reliable occlusion as said plastic buffering material or materials are capable of hardening at the moment when said stable, reliable occlusion state is obtained.

With regard to combination of said plastic buffering material or materials and pressure buffering layer or layers, stable and reliable occlusion can be obtained as said plastic buffering material or materials are hardened at the moment when said occlusion obtains the best fitness.

In this invention, said primarily-hardening plastic buffering material or materials are hardened at the central position of the occlusion, while said secondary-hardening buffering material or materials are hardened in the lateral movement and in the forwards movement, so that a more precise and stable occlusion state is obtained.

Another example enables a plastic buffering material or materials of said artificial tooth or teeth of this invention to be hardened at temperature in one's mouth, and to be softened in hot water, and said tooth or teeth are fed back in said mouth, thus hardening the tooth or teeth at the appropriate occlusion state. Therefore, a patient himself or herself is able to obtain easily a stable and reliable occlusion state.

A microcomputer incorporated in said artificial tooth or teeth is capable of analyzing information received from said occlusal-pressure sensing element or elements, and controlling adjustment of the occlusal-surface so as to enable said occlusal-eurface to obtain the most stable and comfortable position.

A patient is able to sense certainly feeling of his or her occlusion of artificial tooth or teeth of this invention, and transmit control signals by himself or herself through said handy-control transmitter, thus enabling said occlusal-surface to displace so as to obtain the most stable and comfortable occlusion.

Said power source for said driving-motor can be charged by wireless transmitting of high-frequency energy so that the service-life of said power source and driving motor is expected to do desirable adjustment of occlusion for as long as almost permanently.

Said wedge-like elevating block and blocks have sufficient strength to endure an unexpectedly strong load of stress because their material and physical structure are so tough and so designed..

The surface of said dental-corona in said artificial tooth or teeth of this invention has limitless freedom of being made of a variety of its colors and physical formation any patient would prefer, and then a mechanic system capable of controlling said occlusion is assembled with said patient's favorite dental-corona after said dental-corona has been made preferably, thus enabling said patient to enjoy his or her favorite artificial tooth or teeth.

### Industrial Applicability

An artificial tooth or teeth, and controlling and adjusting system or systems of this invention are of great use for the dental treatment.

## Claims

1. An artificial anterior tooth, as shown in a virtual sectional view of said artificial anterior tooth, which is **characterized in** principle as said artificial anterior tooth comprises; a pressure-buffering layer (10), an adjusting mechanism (3) having at least one of such functions as controlling vertical, horizontal, and oblique directional movements of the dental-corona (1), and rotational movement around the axis of said dental-corona (1), at least one of occlusal-pressure sensing elements (4), at least one of pressure-buffering mechanisms (5) if necessary, and a connecting rod (7) capable of operating said adjusting mechanism (3) from the outside of said dental oorona, a connecting rod (8) capable of adjusting the strength of said pressure-buffering mechanism (5), and a dental-corona connector (6) being connected with at least one of information-communicating lines (9) linking up with said occlusal-pressure sensing element(s) (4), where all of them are assembled between said dental-corona (1) and a connecting portion (2) of said artificial anterior tooth.

2. An artificial molar tooth or an artificial premolar tooth, as shown in a virtual sectional view of said artificial molar or premolar tooth, which is **characterized in** principle as said artificial molar or premolar tooth comprises; a pressure-buffering layer (59), an adjusting mechanism (52) capable of doing at least one of such functions as controlling vertical, horizontal, obliquely in the mesial or distal direction, obliquely in the buccal or lingual direction, and oblique directional movements of the occlusal surface, and rotating movement, at least one of occlusal-pressure sensing elements (53), at least one of pressure-buffering mechanisms (54) if necessary, where all of them are assembled between an occlusal surface (50) and a connecting portion (51), and on said artificial molar tooth or premolar tooth assembled is a dental-corona connector (55) where there is an open dental-corona port, to which connectable are; at least one of components such as a connecting rod (58) connected with said adjusting mechanism (52), a connecting rod (56) linking up with said pressure-buffering mechanism (54) if necessary, and at least one of information communicating lines (57) linking up with said occlusal-pressure sensing elements (53).

3. The artificial or teeth as in claims 1 and 2, wherein said artificial tooth or teeth are characterized as said pressure-buffering layers(10) and (59) are hardened at the body temperature in one's mouth, but on the other hand, they are softened in warmer water or colder water outside said mouth.

4. The artificial tooth or teeth as in claims 1 and 2, wherein said artificial tooth or teeth are characterized as said pressure-buffering layers (10) and (59) are hardened during masticating, but on the other hand they are softened during adjusting occlusion fitness of said artificial teeth.

5. The artificial tooth or teeth as in claims 1 and 2, wherein said artificial tooth or teeth are characterized as said pressure-buffering layers (10) and (59) are hardened by being in irradiated with light of certain frequencies, but on the other hand they are softened by being irradiated with light of different frequencies, and in addition to it, said pressure-buffering layers (10) and (59) are also hardened during mastication, whereas are softened during adjusting occlusion fitness of said artificial teeth.

6. A driving-motor system for occlusion-adjustment comprises; a driving-motor (102), a power source (103), a control-switch (104), a controller (105), and a connector (101) of said driving-motor, being compatible with said dental-corona connector, and easily attached to and detached from just opposite face of a dental-corona connector (100) of said artificial teeth.

7. A driving-motor system for occlusion-adjustment comprises; a driving-motor (102) a power source (103), a control-switch (104), a controller (105), and a connector (101) of said driving-motor which is compatible a dental-corona connector (100), and easily attached to and detached from said dental-corona connector (100) located in an open port of said artificial teeth, wherein said open port of said dental-corona connector (100) is a counterpart of an end of a transmitter of said diving-motor system, and said driving-motor system is capable of controlling at least one of movements including such as vertical, horizontal, oblique, rotating around an axis, and a terminal of an information-communicating line capable of transmitting sensed information such as occlusal-pressure at the occlusal surface, and the sense of touch.

8. The driving-motor system for occlusion adjustment as in claim 6, wherein said driving-motor is characterized as having at least one of adjusting, controlling, and/or operating functions such as changing rotation from ordinary direction to the reverse direction and vice versa, controlling over the speed of the said motor, controlling intensity of rotation torque, controlling over said driving-motor according to information transmitted from an occlusal-pressure sensing element, controlling over said driving-motor according to information transmitted from an occlusal-pressure sensing film, controlling over said driving-motor according to information from both said occlusal-pressure sensing film and said occlusal-pressure sensing element, and controlling over a clutch.

9. A method with which a dentist or an operator is able to control easily and safely over occlusion adjustment by inputting necessary data into a computer (151), as said computer system is capable of displaying data with at least one of displays such as datum numbers, graphs, figures, and/or colors, communicating through a cable (154) or a wireless transceiver system with said occlusal-pressure sensing film (150) capable of sensing at least one of such the data as occlusal-pressure, occlusal area, occlusal positions, physical contact data between teeth which make an occlusion during the mandibular movement, thus offering an artificial teeth adjusting system for ideal occlusion of said artificial teeth, and also claimed is an artificial tooth controlling system for occlusion-adjustment comprising a preinstalled computer program capable of controlling said driving-motor (152), said connector (153) of said driving-motor related to the movement of said driving-motor connects with said dental-corona connector (157) which is prepared to be connected with or disconnected from.

10. An artificial tooth or teeth and a control system thereof related to the artificial tooth adjusting system as in claim 9, which are **characterized by** being capable of controlling over said driving-motor (152) by means of putting information from said occlusal-pressure sensing element (155) into said computer system (151) through a feedback line (156).

11. An artificial tooth or teeth that are **characterized by** having a dental-corona connector (200) comprising a layer of variable film (201).

12. An artificial molar tooth or an artificial premolar tooth, as shown in a virtual sectional view of said artificial molar or premolar tooth, which is **characterized in** principle as said artificial molar tooth or artificial premolar tooth comprises an adjusting layer (254) made of a plastic buffering-material (253) between an occlusal-surface (251) and a connecting portion (252), which is capable of hardening the whole of itself as a result of said plastic buffering layer has been hardened when said occlusal surface (251), capable of falling down and/or making displacement under occlusal pressure, has obtained an appropriate, stable occlusion.

13. An artificial anterior tooth, as shown in a virtual sectional view of said artificial anterior tooth, which is **characterized in** principle as said artificial anterior tooth having a adjusting material (313) made of a plastic buffering-layer (312) between a dental-corona (310) and a connecting portion (311), which is capable of hardening the whole of itself as a result of said hardened plastic buffering layer when said dental-corona (310), capable of falling down and/or making displacement, obtains an appropriate, stable occlusion.

14. An artificial molar tooth or an artificial premolar tooth, as shown in a virtual sectional view of said artificial molar or premolar tooth, which is **characterized in** principle as said artificial molar tooth or artificial premolar tooth comprising; an adjusting layer (353) made of plastic buffering-material, and a pressure-adjusting layer (354) made of a plastic buffering-material (352) capable of elongating and shrinking freely, which are assembled between an occlusal-surface (350) and a connecting portion (351), wherein at first said plastic buffering-material (352) is capable of hardening itself when an appropriate, stable occlusion is obtained, thus resulting in any resultant strains having been absorbed in said adjusting layer (353), and said pressure-buffering layer (354) made of said plastic pressure-buffering material, still serves as a pressure-buffering agent between said occlusal-surface (350) and said connecting portion (351).

15. An artificial anterior tooth, as shown in a virtual sectional view of said artificial anterior, which is **characterized in** principle as said artificial anterior tooth comprising; an adjusting layer (403) made of plastic buffering-material (402), and a pressure-adjusting layer (404) made of a plastic buffering-material capable of elongating and shrinking freely between a dental-corona (400) and a connecting portion (401), wherein at first said adjusting layer (403) is capable of being hardened when an appropriate, stable occlusion is obtained, thus resulting in any given strains having been absorbed in said adjusting layer (403), and said pressure-buffering layer (404), made of said plastic pressure-buffering material, still serves as a pressure-buffering agent between said dental-corona (400) and said connecting portion (401).

16. The artificial tooth or teeth as in claims 12, 13, 14, and 15, wherein hardening and softening of said buffering materials are easily operated respectively with irradiation by two kinds of light having different frequencies at an operator's disposal.

17. The artificial tooth or teeth as in claims 12, 13, 14, and 15, wherein said buffering materials soften at low or high temperature in the environment outside of one's mouth, but on the other hand they harden when they are inside one's mouth.

18. An artificial molar tooth or an artificial premolar tooth, as shown in a virtual sectional view of said artificial molar or premolar tooth, which is **characterized in** principle as said artificial molar or premolar tooth has a primarily-hardening plastic buffering material or materials (450) between an occlusal-surface and a connecting portion, capable of being hardened at the central-position of occlusion, and a secondary-hardening plastic buffering material or materials (451) capable of being hardened when said artificial tooth or teeth obtain an appropriate range of movement without any cusp-buffering movement during lateral movement and/or forward movement.

19. An artificial anterior tooth, as shown in a virtual sectional view of said artificial anterior tooth, which is **characterized in** principle as said artificial anterior tooth has a primary-hardening plastic buffering material or materials assembled between an occlusal-surface and a connecting portion, capable of being hardened at the central-position of occlusion and a secondary-hardening plastic buffering material or materials capable of being hardened when said artificial tooth or teeth obtain an appropriate range of movement without any cusp-buffering movement during lateral movement and forward movement.

20. The artificial tooth or teeth as in claims 18 and 19, wherein softening of said primary-hardening plastic buffering material or materials and said secondary-hardening plastic buffering material or materials are easily performed by irradiation of a light having a different frequency from frequencies of the lights as stated below, while hardening and softening of said buffering material or materials are still independently operated at an operator's disposal with irradiation by said two lights having different frequencies, respectively.

21. The artificial tooth or teeth as in claims 18 and 19, wherein said primary-hardening plastic buffering material or materials and said secondary-hardening plastic buffering material or materials are able to be hardened in one's mouth, while said primary-hardening plastic buffering material or materials soften at higher temperature outside one's mouth, and said secondary-hardening plastic buffering material or materials soften at lower temperature outside one's mouth.

22. An artificial molar tooth or teeth including an artificial premolar tooth or teeth, as shown in a virtual sectional view of said artificial molar or premolar tooth, which are **characterized by** comprising; a adjusting mechanism (502) set up between an occlusal-surface (500) and a connecting portion (501), capable of controlling over free-moving of occlusal-surface (500), a driving motor (503), a power source (504), at least one of occlusal-pressure sensing elements (505), and a microcomputer (506) capable of operating relationally, thus making it possible for said system to detect the position of the occlusion-center, forward and lateral movements, and to place said artificial tooth or teeth at the best position.

23. An artificial anterior tooth shown in a virtual sectional view of said artificial anterior tooth, which is **characterized by** having an adjusting mechanism (552) between a dental-corona (550) and a connecting portion (551), capable of controlling over free-moving of said dental-corona (550), a driving motor (553), a power source (554), at least one of occlusal-pressure sensing elements (555), and a microcomputer (556) capable of operating relationally, thus making it possible for said system to detect the position of the occlusion-center, forward and lateral movements, and to place said artificial tooth or teeth at the best position.

24. An artificial molar tooth or an artificial premolar tooth, as shown in a virtual sectional view of said artificial molar or premolar tooth, which is **characterized by** having an adjusting mechanism (602) between an occlusal-surface (600) and a connecting portion (601), capable of controlling free-moving of occlusal-surface (600), a driving motor (603), a power source (604), at least one of occlusal-pressure sensing elements (605), and a receiver (606) capable of enabling an operator or patient himself or herself to operate a wireless control transmitter (607) to reproduce the sensing of said patient's feeling, and thus to make said occlusal-surface move to the best place.

25. An artificial anterior tooth, as shown in a virtual sectional view of said artificial anterior tooth, which is **characterized by** having an adjusting mechanism (652) between a dental-corona (650) and a connecting portion (651), capable of controlling over free-moving of said dental-corona (650), a driving motor (653), a power source (654), at least one of occlusal-pressure sensing elements (655), and a receiver (656) capable of enabling an operator or patient himself or herself to operate a wireless control transmitter (657) to reproduce the sensing of said patient's feeling, and thus making said dental-corona (650) move to the best place.

26. An artificial tooth system which is **characterized by** having a handheld wireless controller capable of operating an adjusting mechanism capable of adjusting a given occlusal-surface, thus controlling appropriately over said occlusal-surface, with said handheld wireless controller sending signals to a receiver set up between said occlusal-surface of said artificial tooth or teeth in a patient's mouth and said connecting portion of said artificial tooth or teeth, and said signals then drive said driving motor, wherein said wireless controller is capable of not only controlling to drive said driving-motor but also providing power, by means of transmitting high frequency energy, and said artificial tooth or teeth are capable of receiving said transmitted power.

27. An artificial molar tooth or an artificial premolar tooth, as show in a virtual sectional view of said artificial molar or premolar tooth, which is **characterized in** principle by comprising; a wedge-like block (703) capable of sliding up and down, linking up with a connecting rod (704), and an elastic layer (705), with all of them being assembled between said occlusal-surface (701) and said connecting portion (702).

28. An artificial molar tooth or an artificial premolar tooth, as shown in a virtual sectional view of said artificial molar or premolar tooth, which is **characterized in** principle by comprising; a wedge-like block (703) capable of sliding up and down, linking up with a connecting rod (704), and an elastic layer (705) between an occlusal-surface (701) and a connecting portion (702), with the contacting surface of both said occlusal-surface and said connecting portion having complementary convex portions and concave portions to fit in appropriately with each other.

29. An artificial molar tooth or an artificial premolar tooth as in claims 26 and 27, wherein said a artificial tooth or teeth are **characterized by** having a wedge-like block (703) capable of sliding up and down, which is comprised of respectively; (1), only hard materials, (2), soft materials capable of making elastic-deformation by receiving an occlusal-pressure, or (3), combined materials of hard and soft materials.

30. An artificial anterior tooth, as show in a virtual sectional view of said artificial anterior tooth, which is **characterized in** principle by having a wedge-like block (753) capable of sliding up and down, linking up with a connecting rod (752), and an elastic layer (754) setup between a dental-corona (751) and a connecting portion (750).

31. An artificial anterior tooth, as show in a virtual sectional view of said artificial anterior tooth, which is **characterized in** principle by having a wedge-like block (753) capable of sliding up and down, linking up with a connecting rod (752), and an elastic layer (754) between a dental-corona (751) and a connecting portion (750), with the respective inner contacting surfaces of both said dental-corona (751) and a connecting portion (756) having complementary convex portion and concave portion to fit in with each other.

32. The artificial anterior tooth or teeth as in claims 29 and 30, wherein said artificial tooth or teeth are **characterized by** having a wedge-like block (703) capable of sliding up and down, which is comprised of respectively; (1), only hard materials, (2), soft materials capable of making elastic-deformation by receiving an occlusal-pressure, or (3), combined materials of hard and soft materials.

33. The artificial molar or premolar tooth including teeth thereof as in claims 2, 11, 12, 14,18,21,23,25,26,27, and 28, wherein a top or tops of said dental-corona(s) of said tooth or teeth are replaceable with another one or other ones.

34. The artificial anterior tooth or teeth as in claims 1, 11, 13, 15, 22, 24, 25, 29, 30, and 31, wherein a top or tops of said dental-corona(s) of said tooth or teeth are replaceable with another one or other ones.

35. An artificial system and a controlling system that are characterized as all the data on occlusion between the maxillary site and mandibular site of a patient's mouth are able to be input into a computer system, and said computer system is capable of operating a driving motor so that unstable occlusion is brought into stable, appropriate occlusion.

36. An artificial tooth system and a controlling system capable of controlling over said artificial tooth system, as collecting all the data about occlusion of all the teeth in a patient's mouth, which are characterized as the occlusal-surface of said artificial tooth system is capable of making displacement such as vertical, horizontal, oblique directional, and rotating around an axis movements so as to obtain at least one of contacts such as both-sides balance, inwards-outward balance, one-side balance, cuspid guidance, and lingualized occlusion.

37. An artificial system and a controlling system capable of controlling over said artificial tooth system capable of collecting all the data about occlusion of all the teeth in a patient's mouth, which are characterized as the occlusal-surface of said artificial tooth system is capable of making displacement such as vertical, horizontal, oblique directional, and rotating around an axis movements so as to obtain at least one of contacts such as full balanced occlusion, group functioned occlusion, and mutually protected occlusion.

38. The controlling system for an artificial tooth or teeth as in claim 36, which is characterized as said controlling system is capable of operating said driving motor so as to make said occlusal-surface obtain the best fitness.

39. An artificial tooth system and a controlling system capable of controlling over said artificial tooth system capable of collecting all the data about occlusion of all the teeth in a patient's mouth, wherein said artificial tooth system having a movement-control mechanism as the occlusal-surface of said artificial tooth system is capable of making displacement such as vertical, horizontal, oblique directional, and rotating around an axis movements so as to provide easily at least one of appropriate relations between the jaw position and occlusion position such as "slide in centric", "point centric" and "freedom in centric".

40. The control system for an artificial tooth or teeth as in claim 38, which is characterized as said control system is capable of operating said driving motor so as to make said occlusal-surface obtain the best fitness.

41. An artificial tooth system, which is characterized as a dental-corona of said artificial tooth system is capable of inclining so as to make occlusion come into the best fitness, and said dental-corona is able to rotate around the contact point on the top of a pillar (805) set up inside said dental-corona, which is capable of rising-up and falling-down as a connecting rod (807) rotates in the ordinary direction or in the reverse direction, thus making said dental-corona incline around pivotal point of the top of said elevating pillar (805) according to the varied distance between said pillar and periphery of said dental-corona, while said connecting rod (807) is so fixed that said distance between said pillar and the periphery of said dental-corona can be adjustable, and a connecting rod (802) linking up with a rotational disk (803) is exposed in the open port of a dental-corona connector (809) of said artificial tooth, and rising-up or falling down of said elevating pillar (805) enables the entire body of said dental-corona to rise up or fall down.

42. The artificial tooth system as in claim 41, which is **characterized by** being capable of receiving information from an occlusal-pressure sensing element (808) set up in a dental-corona, which is capable of sensing occlusal-pressure, and of sending said information to a dental-corona connector (809), thus controlling over said occlusion as desired by operating said driving-motor.

43. An artificial tooth system which is characterized as said artificial tooth or teeth are controllable at will, having a connecting rod (852) incorporated in an open port of a dental-corona connector (859) linking up with an elevating mechanism located right below the cusp, and turning of said connecting rod (852) into the ordinary direction or into he reverse direction makes an elevating pillar (855) rise up or fall down. With regard to said molar tooth or premolar tooth, dental-corona thereof is supported by three pillars, two of which are located right below two function cusps, and one is located right below one dysfunction cusp, respectively, and said occlusion of said tooth or teeth are controlled at will by adjusting at least one or said elevating pillars.

44. The artificial tooth system as in claim 43, which is **characterized by** having a rotational disk (858) as elevating mechanism,

45. The artificial tooth system as in claims 43 and 44, which is **characterized by** having an occlusal-pressure sensing element (858) in said dental-corona, and an information communicating line incorporated into an open port of a dental-corona connector.

46. The artificial tooth system as in claims 43, 44, and 45, which is **characterized by** having a holding pillar (857) incorporated into the center portion of said artificial tooth, thus making a dental-corona and a connecting portion be controllable and firmly constructed.

47. An artificial molar or premolar tooth system which is characterized as occlusion of said artificial tooth system is easily obtained by having an elevating mechanism or elevating mechanisms right below cusps of said tooth or teeth, and supporting completely a dental-corona or dental-coronas at least with two supporting points, and said connecting rods of said elevating mechanism are incorporated into an open port of a dental-corona connector, thus rotating said connecting rods in the ordinary direction or in the reverse direction makes said dental-corona move at operator's disposal, thereby making it possible to adjust appropriately the occlusion of said artificial tooth system.
